# EUROPEAN PATENT APPLICATION

(11) **EP 4 343 917 A1**
(43) Date of publication of application: **27.03.2024**
(21) Application number: 21942217.7
(22) Date of filing: 25.05.2021
(51) Int. Cl.: H01M 10/0587

(54) **BATTERY AND ELECTRONIC DEVICE**

(71) Applicant: Ningde Amperex Technology Ltd., Ningde, Fujian 352106 (CN); Dongguan Amperex Technology Limited, Dongguan City, Guangdong Province 523000 (CN)
(72) Inventor: DONG, Yuyang, Ningde, Fujian 352106 (CN); YAN, Dongyang, Ningde, Fujian 352106 (CN); ZENG, Qiao, Ningde, Fujian 352106 (CN)
(74) Representative: Icosa
(86) International application number: PCT/CN2021/095685
(87) International publication number: WO 2022/246629

(57) **Abstract**

This application provides a battery (1), including a first conductor (11) and a first conductive material layer (12). The first conductor (11) includes a first surface (111) and a second surface (112). The first surface (111) and the second surface (112) are two oppositely disposed surfaces of the first conductor (11). The first conductive material layer (12) is disposed on the first surface (111). The first conductive material layer (12) includes a first recess (121). The first conductor (11) further includes a first region (113) and a second region (114). A first preset spacing exists between the first region (113) and the second region (114). The first region (113) is exposed from the first recess (121). The first conductive material layer (12) exposes the second region (114). The battery (1) further includes a first conductive plate (40). In the second region (114), the first conductor (11) is connected to the first conductive plate (40). This application further relates to an electronic device (5). By using the battery (1), the stress between the first conductor (11) and the first conductive material layer (12) can be suppressed, and the life of the battery can be increased.

## Description

### TECHNICAL FIELD

This application relates to the technical field of battery manufacturing, and in particular, to a battery and an electronic device.

### BACKGROUND

Currently, terminals powered by electric energy are developing toward mobility and portability. In view of this, battery manufacturers have now strengthened the anti-drop performance of batteries. In a process of preparing a battery, when an active material layer is disposed on a surface of a current collector, the active material layer formed on the current collector tends to increase in length, thereby generating a stress between the active material layer and the current collector. Under the effect of the stress, the active material layer may peel off from the current collector. In addition, lithium plating is prone to occur on the surface of a negative active material layer located at a corner, thereby adversely affecting the life of the battery.

### SUMMARY

In view of the foregoing situation, it is necessary to provide a battery and an electronic device to optimize the morphology of an electrode plate in an electrode assembly, suppress a stress between the first conductor and the first conductive material layer, and increase the life of the battery.

An embodiment of this application provides a battery, including a first conductor and a first conductive material layer. The first conductor includes a first surface and a second surface. The first surface and the second surface are two opposite surfaces of the first conductor. The first conductive material layer is disposed on the first surface. The first conductive material layer includes a first recess. The first conductor further includes a first region and a second region. The first region is separated from the second region. The first region is exposed from the first recess. The first conductive material layer exposes the second region. The battery further includes a first conductive plate. In the second region, the first conductor is connected to the first conductive plate.

In the foregoing battery, the first recess is disposed on the first conductive material layer, and the first recess is disposed in the first region. The first conductive plate is disposed in the second region. The second region is far from the first region, and the first conductor is connected to the first conductive plate disposed in the second region. Therefore, the first conductive plate is arranged away from the first recess. When the battery is impacted or dropped or the like, the first conductor may be elongated. The first conductive plate is far away from the first recess, thereby suppressing the stress between the first conductor and the first conductive material layer.

In a possible implementation, the first conductor includes a plurality of first regions.

In a possible implementation, a direction perpendicular to a surface of the first conductive material layer is a first direction. Along the first direction, the first recess includes a first part and a second part that extend by different distances.

In a possible implementation, along the first direction, the first recess further includes a third part. The third part extends by a different distance than the first part and the second part.

In a possible implementation, a direction perpendicular to the first direction is a third direction. Along the third direction, a first length of the first part is different from a second length of the second part.

In a possible implementation, along the third direction, a third length of the third part is different from the first length of the first part and the second length of the second part.

In a possible implementation, the first conductive material layer includes a plurality of first recesses, and the plurality of the first recesses overlap along the third direction.

In a possible implementation, along the first direction, an extension distance range of the first recess is 1 µm to 200 µm. When viewed along the first direction, a length range of the first recess is 0.5 mm to 5 mm.

In a possible implementation, a plurality of first regions at different locations are exposed from a same first recess.

In a possible implementation, the first conductor and the first conductive material layer are a wound structure that includes a plurality of first segments, and the first recess is disposed in the first segments.

In a possible implementation, a direction perpendicular to a surface of the first conductive material layer is a first direction. When viewed along the first direction, the first region is surrounded by the first conductive material layer.

In a possible implementation, the battery further includes a first layer containing an insulation material, and the first layer is connected to the first conductive material layer.

In a possible implementation, a direction perpendicular to a surface of the first conductive material layer is a first direction. Along the first direction, a dimension of the first layer is 5 µm to 30 µm.

In a possible implementation, the first layer is a bonding layer.

In a possible implementation, the bonding layer includes a substrate layer and an adhesive layer disposed on the substrate layer. The substrate layer includes polyethylene terephthalate. The adhesive layer includes a styrene-isoprene-styrene block copolymer.

In a possible implementation, the first conductor is a current collector.

In a possible implementation, the first conductor includes copper or aluminum.

In a possible implementation, the first conductive material layer is an active material layer.

In a possible implementation, the first conductive material layer includes lithium.

In a possible implementation, the battery further includes a second conductive material layer. The second conductive material layer is disposed on the second surface. The second conductive material layer includes a second recess. The first conductor further includes a third region and a fourth region. The third region is separated from the fourth region. The third region is exposed from the second recess. The second conductive material layer exposes the fourth region. The battery further includes a second conductive plate. In the fourth region, the first conductor is connected to the second conductive plate.

In a possible implementation, the first conductor includes a plurality of third regions.

In a possible implementation, a direction perpendicular to a surface of the second conductive material layer is a first direction. Along the first direction, the second recess includes a fourth part and a fifth part that extend by different distances.

In a possible implementation, along the first direction, the second recess further includes a sixth part. The sixth part extends by a different distance than the fourth part and the fifth part.

In a possible implementation, a direction perpendicular to the first direction is a third direction. Along the third direction, a fourth length of the fourth part is different from a fifth length of the fifth part.

In a possible implementation, when viewed along the third direction, a sixth length of the sixth part is different from the fourth length of the fourth part and the fifth length of the fifth part.

In a possible implementation, the second conductive material layer includes a plurality of second recesses. The plurality of the second recesses overlap along the third direction.

In a possible implementation, along the first direction, an extension distance range of the second recess is 1 µm to 200 µm. When viewed along the first direction, a length range of the second recess is 0.5 mm to 5 mm.

In a possible implementation, the second conductive material layer is a wound structure that includes a plurality of first segments, and the second recess is disposed in the first segments.

In a possible implementation, a direction perpendicular to a surface of the second conductive material layer is a first direction. When viewed along the first direction, the third region is surrounded by the first conductive material layer.

In a possible implementation, the battery further includes a first layer containing an insulation material. The first layer is connected to the second conductive material layer.

In a possible implementation, a direction perpendicular to a surface of the second conductive material layer is a first direction. Along the first direction, a dimension of the first layer is 5 µm to 30 µm.

In a possible implementation, the second conductive material layer is an active material layer.

In a possible implementation, the second conductive material layer includes lithium.

In a possible implementation, the first recess and the second recess are disposed in a staggered manner.

In a possible implementation, the first conductor is a positive conductor, and the first conductive material layer is a positive conductive material layer.

An embodiment of this application further provides an electronic device. The electronic device includes a main body and any one of the batteries described above. The battery is accommodated in the main body.

In the battery and electronic device provided in this application, the first recess and the first conductive plate are disposed in the first region and the second region respectively to separate the first region from the second region. In addition, the first recess is disposed in the first region, thereby reducing the contact area between the first conductive material layer and the first conductor, suppressing the stress between the first conductive layer and the first material layer, and increasing the service life of the battery.

### BRIEF DESCRIPTION OF DRAWINGS

FIG. 1 is a three-dimensional schematic structural diagram of a battery according to an embodiment of this application;
FIG. 2 is a three-dimensional schematic structural diagram of an electrode assembly in the battery shown in FIG. 1;
FIG. 3 is schematic sectional view of the electrode assembly shown in FIG. 2 and sectioned along an A-A direction;
FIG. 4 is a local enlarged view of the electrode assembly shown in FIG. 3;
FIG 5 shows a layout of expanded first conductor and first conductive material layer;
FIG. 6 is a local enlarged view of the layout of expanded first conductor and first conductive material layer shown in FIG. 5;
FIG. 7 is a schematic sectional view of the first conductor shown in FIG. 6 and sectioned along a B-B direction;
FIG. 8 is a schematic sectional view of a battery containing a first layer on the basis of FIG. 3; and
FIG. 9 is a schematic diagram of an electronic device according to another embodiment of this application.

### Reference numerals:

| | |
|---|---|
| Battery | 1 |
| Electrode assembly | 100 |
| First electrode plate | 10 |
| First conductor | 11 |
| First surface | 111 |
| Second surface | 112 |
| First region | 113 |
| Second region | 114 |
| Third region | 115 |
| Fourth region | 116 |
| First conductive material layer | 12 |
| First end | a |
| Second end | b |
| First recess | 121 |
| Recess portion I | 121a |
| Recess portion II | 121b |
| Recess portion III | 121c |
| Recess portion IV | 121d |
| Recess portion V | 121e |
| First part | 1211 |
| Second part | 1212 |
| Third part | 1213 |
| Second conductive material layer | 13 |
| Third end | c |
| Fourth end | d |
| Second recess | 131 |
| Recess portion VI | 131a |
| Recess portion VII | 131b |
| Recess portion VIII | 131c |
| Recess portion IX | 131d |
| Recess portion X | 131e |
| Fourth part | 1311 |
| Fifth part | 1312 |
| Sixth part | 1313 |
| Other parts | 1214, 1314 |
| Separator | 20 |
| Second electrode plate | 30 |
| First conductive plate | 40 |
| Third conductive plate | 50 |
| First layer | 60 |
| First segment | M |
| Second segment | N |
| Boundary | O |
| Housing | 200 |
| Electronic device | 5 |
| Main body | 300 |

### DETAILED DESCRIPTION

The following describes the technical solutions in the embodiments of this application clearly and thoroughly. Evidently, the described embodiments are merely a part of but not all of the embodiments of this application. Unless otherwise defined, all technical and scientific terms used herein have the same meanings as usually understood by a person skilled in the technical field of this application. The terms used in the specification of this application are merely intended for describing specific embodiments but not intended to limit this application.

The following describes the implementations of this application in detail. However, this application may be embodied in many different forms, and is in no way construed as being limited to the exemplary implementations described herein. Rather, the exemplary implementations are provided to disclose this application thoroughly in detail to those skilled in the art.

In addition, for brevity and clarity, the size or thickness of various components and layers in the drawings may be scaled up. Throughout the text, the same reference numerical means the same element. As used herein, the term "and/or" includes any and all combinations of one or more related items preceding and following the term. In addition, understandably, when an element A is referred to as "connecting" an element B, the element A may be directly connected to the element B, or an intermediate element C may exist through which the element A and the element B can be connected to each other indirectly.

Further, the term "may" used in describing an implementation of this application means "one or more implementations of this application".

The technical terms used herein is intended to describe specific implementations but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

Space-related terms, such as "on", may be used herein for ease of describing the relationship between one element or feature and other element (elements) or feature (features) as illustrated in the drawings. Understandably, the space-related terms are intended to include different directions of a device or apparatus in use or operation in addition to the directions illustrated in the drawings. For example, if a device in the drawing is turned over, an element described as "above" or "on" another element or feature will be oriented "under" or "below" the other element or feature. Therefore, the exemplary term "on" includes both an up direction and a down direction. Understandably, although the terms such as first, second, third may be used herein to describe various elements, components, regions, layers and/or parts, such elements, components, regions, layers and/or parts are not limited by the terms. Such terms are intended to distinguish one element, component, region, layer or part from another element, component, region, layer, or part. Therefore, a first element, a first component, a first region, a first layer, or a first part mentioned below may be referred to as a second element, a second component, a second region, a second layer, or a second part, without departing from the teachings of the exemplary implementations.

An embodiment of this application provides a battery, including a first conductor and a first conductive material layer. The first conductor includes a first surface and a second surface. The first surface and the second surface are two opposite surfaces of the first conductor. The first conductive material layer is disposed on the first surface. The first conductive material layer includes a first recess. The first conductor further includes a first region and a second region. The first region is separated from the second region. The first region is exposed from the first recess. The first conductive material layer exposes the second region. The battery further includes a first conductive plate. In the second region, the first conductor is connected to the first conductive plate.

In the foregoing battery, the first conductive material layer includes the first recess. The first recess is disposed in the first region. The first conductive plate is disposed in the second region. The second region is separated from the first region, and the first conductor is connected to the first conductive plate disposed in the second region. The first recess is disposed on the first conductive material layer to expose the first conductive layer. For example, in a wound battery, the first recess is disposed on the first conductive material layer formed on the first conductive layer, thereby reducing the contact area between the first conductive layer and the first conductive material layer, reducing the stress generated between the first conductive layer and the first conductive material layer, and increasing the life of the battery.

The following describes some embodiments with reference to drawings. To the extent that no conflict occurs, the following embodiments and the features in the embodiments may be combined with each other.

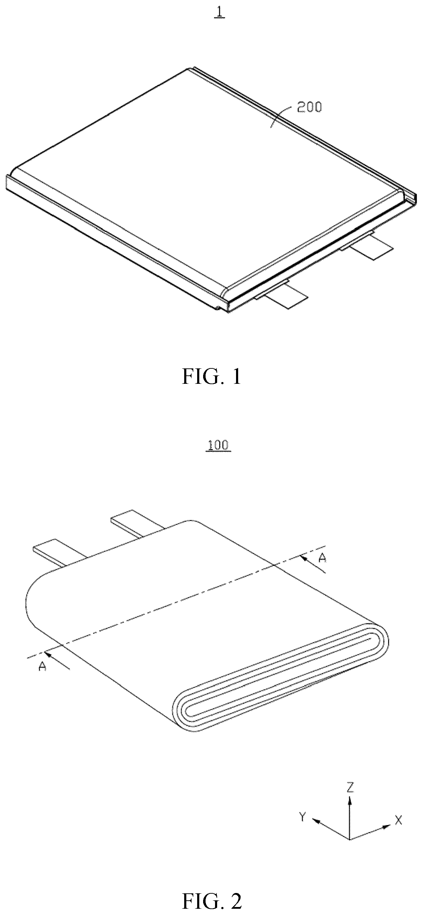

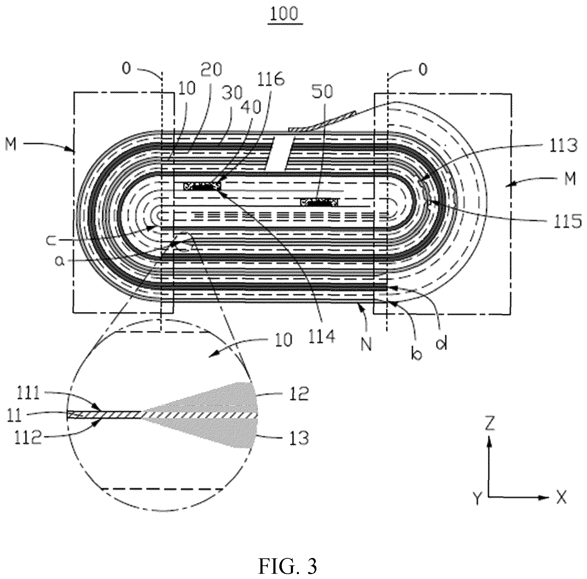

Referring to FIG. 1, FIG. 2, and FIG. 3, in order to describe the structure of a battery 1 more clearly, the battery is illustrated using X, Y, and Z coordinate axes. The X-axis, the Y-axis, and Z-axis are perpendicular to each other. Specifically, the Z-axis is a first direction, the X-axis is a second direction, and the Y-axis is a third direction. In FIG. 3, a direction perpendicular to a surface of a second segment N is a first direction Z. The surface of the second segment N is on a plane defined by an X direction and a Y direction. The cross section of an electrode assembly 100 in FIG. 3 is on a plane defined by the Z direction and the X direction.

This application provides a battery 1. The battery 1 includes an electrode assembly 100 and a housing 200. The housing 200 encloses the electrode assembly 100. The housing 200 is filled with an electrolytic solution to make the battery 1 ready for normal use. The battery 1 is manufactured by disposing the electrode assembly 100 in the housing 200 and injecting the electrolytic solution into the housing 200. This is a common method in the battery manufacturing field, and is not described herein in detail.

The electrode assembly 100 includes a first electrode plate 10, a separator 20, and a second electrode plate 30. The separator 20 is disposed between the first electrode plate 10 and the second electrode plate 30, and is configured to separate the first electrode plate 10 from the second electrode plate 30 to avoid contact between the two electrode plates and avoid a short circuit of the battery 1. The electrode assembly 100 may be formed by stacking the first electrode plate 10, the separator 20, and the second electrode plate 30; or may be formed by winding the first electrode plate 10, the separator 20, and the second electrode plate 30. The two forms of preparing the electrode assembly 100 are also common in the field of the battery 1. The first electrode plate 10 is a positive electrode plate, and the second electrode plate 30 is a negative electrode plate. In this embodiment, the electrode assembly 100 formed by winding is described as an example.

Further, in FIG. 3, the separator 20 is represented by a discontinuous dashed line. It needs to be noted that in actual situations, the separator 20 is a continuous structure.

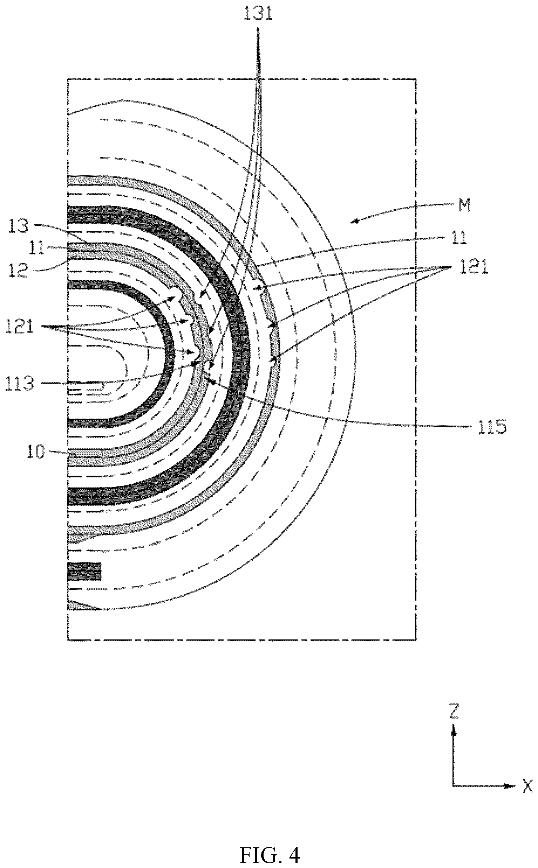

Referring to FIG. 3 and FIG. 4, the first electrode plate 10 includes a first conductor 11 and a first conductive material layer 12. The first conductive material layer 12 is disposed on the first conductor 11. The first conductor 11 includes a first surface 111 and a second surface 112 opposite to the first surface 111. The first conductive material layer 12 is disposed on the first surface 111.

The first conductor 11 further includes a first region 113 exposed from the first conductive material layer and a second region 114 accommodating a first conductive plate 40. The second region 114 is separated from the first region 113. The separation distance between the first region 113 and the second region 114 may be set as required. For example, using a wound electrode assembly 100 as example, when the first region 113 is disposed in a second-outermost layer/circle far away from the center of the electrode assembly 100, the second region 114 may be disposed at a third circle near the second-outermost layer/circle. Further, the second region 114 may be disposed at a fourth circle near the center of the electrode assembly 100. The first region 113 and the second region 114 may be disposed on the first surface 111 of the first conductor 11.

In an embodiment, the first conductor 11 includes a plurality of first regions 113. For example, the first region 113 is disposed at both a first end a of the first conductor 11 and a second end b of the first conductor 11. The first end a corresponding to the first conductive material layer 12 is located at an inner layer of the wound electrode assembly 100, and the second end b corresponding to the first conductive material layer 12 is located at an outer layer of the wound electrode assembly 100.

The first conductive material layer 12 includes a first recess 121. Further, a surface that is of the first conductive material layer 12 and that faces back from the first surface 111 includes the first recess 121. The first recess 121 is formed by recessing the first conductive material layer 12 toward the first surface 111 from the surface that faces back from the first surface 111.

The first region 113 is exposed from the first recess 121, and the first conductive material layer 12 exposes the second region 114. To be specific, the first conductive material layer 12 located on the first region 113 exposes the first region 113 through the first recess 121, and the first conductive material layer 12 located in the second region 114 exposes the second region 114. In other words, when viewed along the first direction Z, the first conductor 11 can be seen at the first region 113, and the first conductor 11 can also be seen at the second region 114. Specifically, the meaning of "expose" here merely means that the first region 113 is exposed from the first conductive material layer 12, but does not negate the contact between the electrolytic solution and the first region 113 after the electrode assembly 100 is loaded into the housing 200, and does not negate the possibility that another part overlays the first region 113 when the electrode assembly 100 is wound.

In an embodiment, the first conductive material layer 12 includes a plurality of first recesses 121. The plurality of first recesses 121 are disposed at different locations, and may differ in shape, size, and depth. Further, a plurality of first regions 113 at different locations are exposed from the same first recess 121. To be specific, the area formed by one of the plurality of first recesses 121 is different from the areas formed by others of the plurality of first recesses 121. This first regions 113 at a plurality of locations are exposed from the first recess 121 depending on its area. Understandably, among the plurality of first recesses 121, the first region 113 may be exposed from some of the plurality of first recesses 121, and it is also possible that the first region 113 is not exposed from others of the plurality of first recesses 121. When the first recess 121 that no first region 113 is exposed from is close to the first conductor 11, the stress between the first conductor 11 and the first conductive material layer 12 can also be suppressed.

Referring to FIG. 3, in this embodiment, the first conductor 11 and the first conductive material layer 12 form a wound structure that includes a plurality of first segments M and second segments N. The second segments N are connected to the first segments M, and are demarcated from the first segments M by a boundary O. Further, a perpendicular line that is perpendicular to a straight line part of a winding line is drawn at a bend point closest to the center of the battery 1 and located between the straight line part and a curved part of the winding line, where the straight line part is along the second direction X of the electrode assembly 100. The boundary O that coincides with the perpendicular line is the boundary between the first segment M and the second segment N. In FIG. 3, the part that is closer to the center of the battery 1 than the boundary O is the second segment N. Further, the straight line part is the second segment N, and the second segment N is disposed along the second direction X. The part that is farther from the center of the battery 1 than the boundary O is the first segment M. The first segment M is connected to the second segment N. Further, in the wound battery structure, the first segment M is a part formed by bending the electrode assembly in a process of winding the electrode assembly.

Referring to FIG. 4, in an embodiment, the first recesses 121 are disposed at the first segment M.

When a first recess 121 is disposed at the first segment M, the cross section of the first recess 121 is circular if the first recess 121 disposed at the first segment M is viewed along the second direction X. Understandably, in other embodiments, the cross section of the first recess 121 may be arc, rectangular, triangular, star-shaped, elliptical, or irregularly shaped. By disposing the first recesses 121 at the second segment N, the electrolyte infiltration at the bend part of the battery 1 can be improved. In addition, the existence of the first recesses 121 can improve the electrolyte retention rate at the bend part of the battery 1, thereby improving the kinetics of the bend part of the battery 1 and suppressing the lithium plating at the bend part.

Understandably, in other embodiments, the first recesses 121 may be disposed at the second segment N.

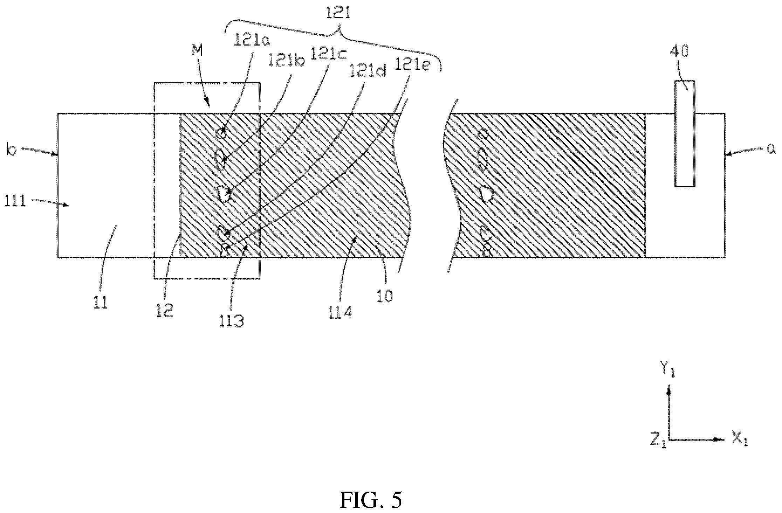

Refer to FIG. 5. The coordinate directions in FIG. 3 are directions in a wound structure of the electrode assembly 100. In order to distinguish from the directions in FIG. 3, FIG. 5 illustrates the structure using X₁, Y₁, and Zi coordinate axes. The Xi-axis, Yi-axis, and Z₁-axis are perpendicular to each other. Specifically, the Z₁-axis is the first direction, the X₁-axis is the second direction, and the Y₁-axis is the third direction. Further, the direction in which the second end b extends to the first end a is X₁. The direction perpendicular to X₁ and directed along the arrangement direction of the first recess 121 is Y₁. Y₁ is identical to the Y direction, and Z₁ is a direction perpendicular to a plane defined by X₁ and Yi. The oblique line part in the drawing is a region accommodating the first conductive material layer 12. The first conductive material layer 12 includes a plurality of first recesses 121. Along the second direction X₁ and the third direction Y₁, the plurality of the first recesses 121 overlap, so as to further reduce the contact area between the first conductor 11 and the first conductive material layer 12 and suppress the stress between the first conductor and the first conductive material layer. In addition, each of the first recesses 121 may be divided into a recess portion I 121a, a recess portion II 121b, a recess portion III 121c, a recess portion IV 121d, and a recess portion V 121e. In addition, the recess portion I 121a, the recess portion II 121b, the recess portion III 121c, the recess portion IV 121d, and the recess portion V 121e may differ in shape and the like.

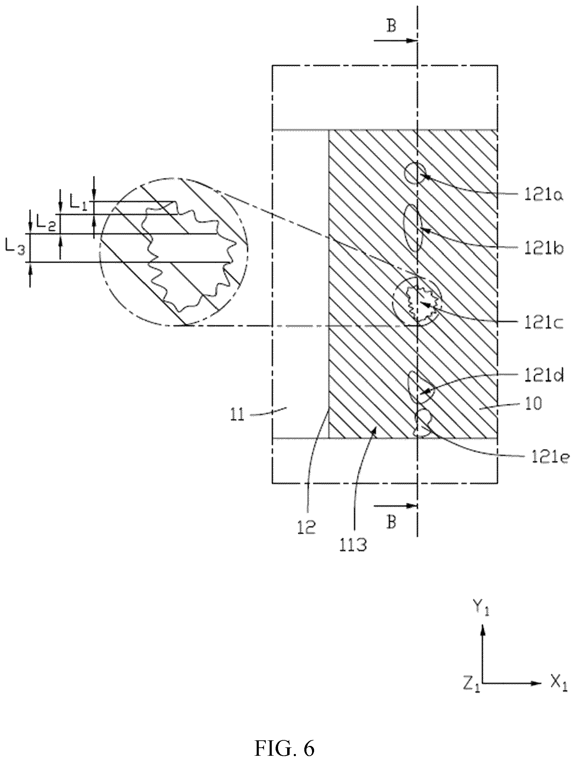

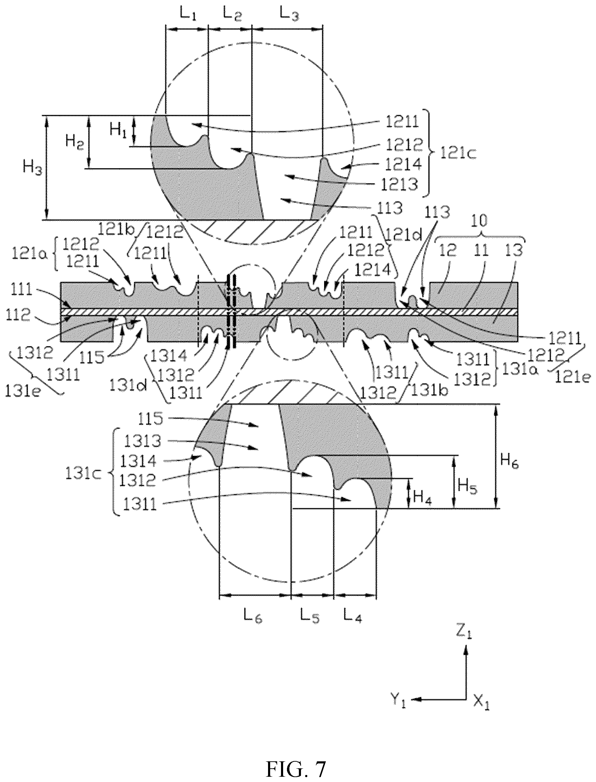

Refer to FIG. 6 and FIG. 7. In order to distinguish from the directions in FIG. 3, FIG. 6 and FIG. 7 illustrate the structure using X₁, Y₁, and Zi coordinate axes. The Xi-axis, the Yi-axis, and Z₁-axis are perpendicular to each other. Specifically, the Z₁-axis is the first direction, the X₁-axis is the second direction, and the Y₁-axis is the third direction. Further, FIG. 6 is a local enlarged view of the first segment M in the layout of an expanded first electrode plate 10 shown in FIG. 3, and FIG. 7 is a schematic sectional view of the first conductor shown in FIG. 6 and sectioned along a B-B direction.

A first region 113 is exposed from the first recess 121. Further, another first region 113 close to the first region 113 may also be exposed from the first recess 121. That is, two or more first regions 113 may be exposed from one first recess 121. Along the first direction Z₁, at least a part of the plurality of the first recesses 121 overlap in the third direction Y₁, and the first recesses 121 differ in length in the second direction X₁ and the third direction Yi. Further, each of the first recesses 121 includes a first part 1211 and a second part 1212 that extend by different distances. Specifically, the first part 1211 and the second part 1212 extend toward the first surface 111 from a surface of the first conductive material layer 12, where the surface faces back from the first surface 111. Along the first direction Z₁, the first part 1211 extends to a position above the center of the first conductive material layer 12, and the second part 1212 extends to a position below the center of the first conductive material layer 12. Further, along the first direction Z₁, the extension distance range of the first recess 121 is 1 µm to 200 µm. The extension distance of the first part 1211 is Hi, and the extension distance of the second part 1212 is H₂. For example, the extension distance H₂ is greater than the extension distance H₁. Further, H₁ is 60 µm and H₂ is 130 µm.

The first recess 121 further includes a third part 1213. Along the first direction Z₁, the third part 1213 extends toward the first surface 111 from a surface of the first conductive material layer 12, where the surface faces back from the first surface 111. The third part 1213 extends until the first region 113 is exposed. In addition, the third part 1213, the first part 1211, and the second part 1212 extend by distances different from each other. The extension distance of the third part 1213 is H₃. For example, the extension distance H₃ is greater than the extension distances H₁ and H₂. Further, H₃ is 200 µm.

Understandably, the extension distances of the first part 1211, the second part 1212, and the third part 1213 described above are merely examples. In other embodiments, the extension distances of the first part 1211, the second part 1212, and the third part 1213 are not limited to the examples. Further, a possible circumstance is that the first recess 121 further includes another part 1214, and the other part 1214 extends along the first direction Zi by a distance greater than H₁ and H₂ but less than H₃. For example, the recess portion III 121c includes a first part 1211, a second part 1212, a third part 1213, and another part 1214 concurrently.

Along the third direction Y₁, the first length L₁ of the first part 1211, the second length L₂ of the second part 1212, and the third length L₃ of the third part 1213 differ from each other. That is, along the third direction Y₁, the first part 1211, the second part 1212, and the third part 1213 extend by different distances. Further, when viewed along the first direction Z₁, the length range of the first recess 121 is 0.5 mm to 5 mm. For example, the length L₁ of the first part 1211 is 1 mm, the length L₂ of the second part 1212 is 1.5 mm, and the length L₃ of the third part 1213 is 3 mm.

Understandably, the lengths of the first part 1211, the second part 1212, and the third part 1213 described above are merely examples. In other embodiments, the extension lengths of the first part 1211, the second part 1212, and the third part 1213 are not limited to the examples.

In an embodiment, when viewed along the first direction Z₁, the first region 113 is surrounded by the first conductive material layer 12. In this way, the electrolytic solution is stored in the first region 113 to improve the kinetics at this region and suppress the lithium plating on the surface of the negative conductive material layer corresponding to this region. In this way, the first conductor 11 can be observed from the first region 113, and the contact area between the first conductive material layer 12 and the first conductor 11 is reduced, thereby reducing the stress received by the first conductive material layer 12 and suppressing the peeling of the first conductive material layer 12 from the first conductor 11.

In an embodiment, the first conductor 11 is a current collector, and the first conductor 11 includes copper or aluminum. Understandably, in other embodiments, the materials included in the first conductor 11 are not limited to the examples.

In an embodiment, the first conductive material layer 12 is an active material layer, and the first conductive material layer 12 includes lithium. Understandably, in other embodiments, the material included in the first conductive material layer 12 is not limited to the example.

In an embodiment, the first conductor 11 is a positive conductor, and the first conductive material layer 12 is a positive conductive material layer.

Referring to FIG. 3, the battery 1 further includes a first conductive plate 40, and the first conductive plate 40 is disposed at the second segment N. In the second region 114, the first conductor 11 is connected to the first conductive plate 40. The first conductive plate 40 is disposed in the second region 114 so that the first conductive plate 40 is separated from the first region 113. That is, the first conductive plate 40 is disposed away from the first recess 121. When the ambient temperature of a product containing the battery 1 changes, the temperature change leads to a change of the relative position between the first conductor 11 and the first conductive material layer 12. The first region 113 is exposed from the first recess 121, and the contact area between the first conductive material layer 12 and the first conductor 11 is reduced, thereby suppressing the stress between the first conductor 11 and the first conductive material layer 12.

In an embodiment, the first conductive plate 40 is a tab, and the tab may be disposed on the current collector by bonding.

Understandably, in other embodiments, the first conductive plate 40 may be disposed on the first conductor 11 by other means such as welding. Alternatively, the first conductive plate 40 and the first conductor 11 may be an integrated structure.

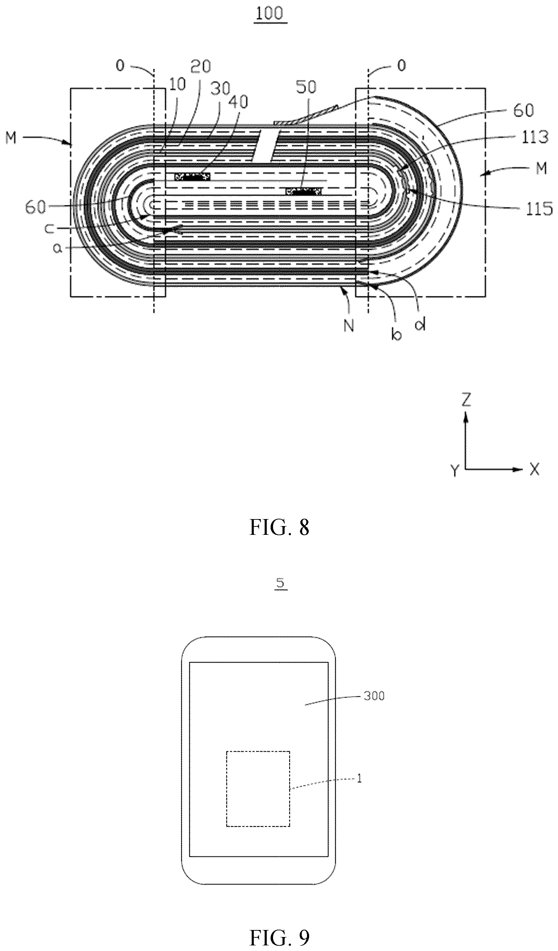

Referring to FIG. 8, the battery 1 further includes a first layer 60 containing an insulation material. The first layer 60 is connected to the first conductive material layer 12. Along the first direction Z, the dimension of the first layer 60 is 5 µm to 30 µm. That is, the thickness range of the first layer 60 is 5 µm to 30 µm. For example, the thickness of the first layer 60 is 15 µm, 20 µm, or 25 µm. In an embodiment, a part of the first layer 60 is connected to the first conductive material layer 12 located in the first region 113, and another part of the first layer 60 is connected to the first conductor 11 exposed. By connecting the first layer 60 to the first conductive material layer 12, when the battery 1 is impacted or dropped or the like, the first layer 60 can limit the movement of the first conductive material layer 12 relative to the first conductor 11, keep a consistent thicknesses of the first electrode plate 10 and the second electrode plate 30 along the first direction Z, and improve the safety performance of the battery 1.

Understandably, in other embodiments, the first layer 60 may also be connected to the first conductive material layer 12 located in the second region 114 to enhance the stability of the first conductor 11 and the first conductive material layer 12.

Further, the first layer 60 is a bonding layer. The bonding layer includes a substrate layer and an adhesive layer disposed on the substrate layer. The adhesive layer is adhesive, so that the first layer can be bonded onto the first electrode plate 10. The material of the substrate layer includes polyolefin, polyolefin nitrile, polyol ester, polyamide, polyurethane, or a composite containing at least one of polyolefin, polyolefin nitrile, polyol ester, polyamide, or polyurethane. The material of the adhesive layer includes polyolefin, polyurethane, polyacrylate, organosilicon, rubber, or a composite containing at least one of polyolefin, polyurethane, polyacrylate, organosilicon, or rubber. In an embodiment, the bonding layer is adhesive tape. Understandably, in other embodiments, the first layer 60 may be replaced with other structures serving equivalent functions or purposes. The materials included in the substrate layer and the adhesive layer are not limited to the examples given above.

Referring to FIG 3 and FIG. 4, the first conductor 11 further includes a third region 115 and a fourth region 116 accommodating a second conductive plate (not shown in the drawing). The fourth region 116 is separated from the third region 115. The separation distance between the third region 115 and the fourth region 116 may be set as required. For example, using a wound electrode assembly 100 as example, when the third region 115 is disposed in a second-outermost layer/circle far away from the center of the electrode assembly 100, the fourth region 116 may be disposed at a third circle near the second-outermost layer/circle. Further, the fourth region 116 may be disposed at a fourth circle near the center of the electrode assembly 100. The third region 115 and the fourth region 116 are disposed on the second surface 112 of the first conductor 11.

In an embodiment, the first conductor 11 includes a plurality of third regions 115. For example, the third region 115 is disposed at both a third end c of the first conductor 11 and a fourth end d of the first conductor 11.

The battery 1 further includes a second conductive material layer 13. The second conductive material layer 13 is disposed on the second surface 112. The second conductive material layer 13 includes a second recess 131. Further, a surface that is of the second conductive material layer 13 and that faces back from the second surface 112 includes the second recess 131. The second recess 131 is formed by recessing the second conductive material layer 13 toward the second surface 112 from the surface that faces back from the second surface 112.

The third region 115 is exposed from the second recess 131, and the second conductive material layer 13 exposes the fourth region 116. To be specific, the second conductive material layer 13 located on the third region 115 exposes the third region 115 through the second recess 131, and the second conductive material layer 13 located in the fourth region 116 exposes the fourth region 116. In other words, when viewed along the first direction Z, the first conductor 11 can be seen at the third region 115, and the first conductor 11 can also be seen at the fourth region 116. Specifically, the meaning of "expose" here merely means that the third region 115 is exposed from the second conductive material layer 13, but does not negate the contact between the electrolytic solution and the third region 115 after the electrode assembly 100 is loaded into the housing 200, and does not negate the possibility that another part overlays the third region 115 when the electrode assembly 100 is wound.

Referring to FIG. 7, in an embodiment, the second conductive material layer 13 includes a plurality of second recesses 131. The plurality of second recesses 131 are disposed at different locations, and may differ in shape, size, and depth. Each of the second recesses 131 may be divided into a recess portion VI 131a, a recess portion VII 131b, a recess portion VIII 131c, a recess portion IX 131d, and a recess portion X 131e. In addition, the recess portion VI 131a, the recess portion VII 131b, the recess portion VIII 131c, the recess portion IX 131d, and the recess portion X 131e may differ in shape and the like.

Further, a plurality of third regions 115 at different locations may be exposed from the same second recess 131. To be specific, the area formed by one of the plurality of second recesses 131 is different from the areas formed by others of the plurality of second recesses 131. The third regions 115 at a plurality of locations may be exposed from the second recess 131 depending on its area. Understandably, it is possible that the third region 115 is not exposed from some of the plurality of second recesses 131. When the second recess 131 that no third region 115 is exposed from is close to the first conductor 11, the stress between the first conductor 11 and the second conductive material layer 13 can also be suppressed. Along the first direction Z₁, at least a part of the plurality of the second recesses 131 overlap in the third direction Yi.

In this embodiment, similar to the first recesses 121, the second recesses 131 are disposed at the first segment M in the wound structure.

In another embodiment, the second recesses 131 may be disposed at the second segment N. In addition, the shape of the second recesses 131 is substantially the same as the shape of the first recesses 121. The term "substantially the same" is understood as the same shape or similar shapes.

Referring to FIG. 7, along the first direction Z₁, each of the second recesses 131 includes a fourth part 1311 and a fifth part 1312 that extend by different distances. Specifically, the fourth part 1311 and the fifth part 1312 extend toward the second surface 112 from a surface of the second conductive material layer 13, where the surface faces back from the second surface 112. Along the first direction Z₁, the fourth part 1311 extends to a position below the center of the second conductive material layer 13, and the fifth part 1312 extends to a position above the center of the second conductive material layer 13. The first surface 111 and the second surface 112 are two opposite surfaces, and therefore, the first recess 121 and the second recess 131 extend in opposite ways. Further, along the first direction Z₁, the extension distance range of the second recess 131 is 1 µm to 200 µm. The extension distance of the fourth part 1311 is H₄, and the extension distance of the fifth part 1312 is H₅. For example, the extension distance H₅ is greater than the extension distance H₄. Further, H₄ is 50 µm and H₅ is 140 µm.

The second recess 131 further includes a sixth part 1313. Along the first direction Z₁, the sixth part 1313 extends toward the second surface 112 from a surface of the second conductive material layer 13, where the surface faces back from the second surface 112. The sixth part 1313 extends until the third region 115 is exposed. In addition, the sixth part, the fourth part 1311, and the fifth part 1312 extend by distances different from each other. The extension distance of the sixth part 1313 is H₆. For example, the extension distance H₆ is greater than the extension distances H₄ and H₅. Further, H₆ is 200 µm.

Understandably, the extension distances of the fourth part 1311, the fifth part 1312, and the sixth part 1313 described above are merely examples. In other embodiments, the extension distances of the fourth part 1311, the fifth part 1312, and the sixth part 1313 are not limited to the examples. Further, a possible circumstance is that the second recess 131 further includes another part 1314, and the other part 1314 extends along the first direction Zi by a distance greater than H₄ and H₅ but less than H₆. For example, the recess portion VIII 131c includes a fourth part 1311, a fifth part 1312, a sixth part 1313, and another part 1314 concurrently.

Along the third direction Y₁, the fourth length L₄ of the fourth part 1311, the fifth length L₅ of the fifth part 1312, and the sixth length L₆ of the sixth part 1313 differ from each other. That is, along the third direction Y₁, the fourth part 1311, the fifth part 1312, and the sixth part 1313 extend by different distances. Further, when viewed along the first direction Z₁, the length range of the second recess 131 is 0.5 mm to 5 mm. For example, the length L₄ of the fourth part 1311 is 1.5 mm, the length L₅ of the fifth part 1312 is 2.5 mm, and the length L₆ of the sixth part 1313 is 3.5 mm.

Understandably, the lengths of the fourth part 1311, the fifth part 1312, and the sixth part 1313 described above are merely examples. In other embodiments, the extension lengths of the fourth part 1311, the fifth part 1312, and the sixth part 1313 are not limited to the examples.

In an embodiment, when viewed along the first direction Z₁, the third region 115 is surrounded by the second conductive material layer 13. In this way, the electrolytic solution is stored in the third region 115 to improve the kinetics at this region and suppress the lithium plating on the surface of the negative conductive material layer corresponding to this region. In this way, the first conductor 11 can be observed from the third region 115, and the contact area between the second conductive material layer 13 and the first conductor 11 is reduced, thereby reducing the stress received by the second conductive material layer 13 and suppressing the peeling of the second conductive material layer 13 from the first conductor 11.

In an embodiment, the second conductive material layer 13 is an active material layer, and the second conductive material layer 13 includes lithium. Understandably, in other embodiments, the material included in the second conductive material layer 13 is not limited to the example.

Referring to FIG. 3, the battery 1 further includes a second conductive plate, and the second conductive plate is disposed at the second segment N. In the fourth region 116, the first conductor 11 is connected to the second conductive plate. The second conductive plate is disposed in the fourth region 116 so that the second conductive plate is separated from the third region 115. That is, the second conductive plate is disposed away from the second recess 131. When the ambient temperature of a product containing the battery 1 changes, the temperature change leads to a change of the relative position between the first conductor 11 and the second conductive material layer 13. The third region 115 is exposed from the second recess 131, and the contact area between the second conductive material layer 13 and the first conductor 11 is reduced, thereby suppressing the stress between the first conductor 11 and the second conductive material layer 13.

In an embodiment, the second conductive plate is a tab, and the tab may be disposed on the current collector by bonding.

Understandably, in other embodiments, the second conductive plate may be disposed on the first conductor 11 by other means such as welding. Alternatively, the second conductive plate and the first conductor 11 may be an integrated structure. Either the first conductive plate 40 or the second conductive plate is connected to the first conductor 11, so as to implement the connection between the tab and the current collector. Alternatively, in another embodiment, the first conductor 11 is connected to both the first conductive plate 40 and the second conductive plate.

The first layer 60 included in the battery 1 is also connected to the second conductive material layer 13. When both the first conductive material layer 12 and the second conductive material layer 13 are disposed on the first conductor 11, the first layer 60 is connected to both the first conductive material layer 12 and the second conductive material layer 13. Further, a part of the first layer 60 is connected to the second conductive material layer 13 located in the third region 115, and another part of the first layer 60 is connected to the first conductor 11 exposed.

Understandably, in other embodiments, the first layer 60 may also be connected to the first conductive material layer 12 located in the fourth region 116 to enhance the stability of the first conductor 11 and the second conductive material layer 13.

Referring to FIG. 3, when the first layer 60 is disposed on the first conductor 11, as viewed along the third direction Y, a terraced layer exists between the first conductor 11 provided with the first layer 60 and the second electrode plate 30. Specifically, the first conductive material layer 12 and the conductive material layer existent on the second electrode plate 30 form a terrace. When the first layer 60 is connected to the first conductive material layer 12, the first layer 60 can fill the formed terrace. In this way, along the first direction Z, the overall thickness of the first electrode plate 10 provided with the first layer 60 and the second electrode plate 30 is the same as the overall thickness of the first electrode plate 10 provided with no first layer 60 and the second electrode plate 30. This suppresses relative movement between the first electrode plate 10 and the second electrode plate 30 when the battery 1 is impacted or dropped.

Referring to FIG. 7, in an embodiment, the first recesses 121 and the second recesses 131 are disposed in a staggered manner, and demarcated by shade lines. This ensures that the stress between the first conductor 11, the first conductive material layer 12, and the second conductive material layer 13 can be suppressed on the basis of disposing the conductive material layer on the first conductor 11. Further, along the first direction Z₁, the first recess 121 overlaps the second recess 131 in some places, as specifically indicated by the dashed arc in the drawing.

Referring to FIG. 7, in an embodiment, the first recess 121 overlaps the second recess 131 in some places, for example, demarcated by the dashed arc shown in FIG. 7, so as to suppress the stress at the position on the first conductor 11 corresponding to the first recess 121 and the second recess 131.

Still referring to FIG. 3, the structure of the second electrode plate 30 is substantially the same as the structure of the first electrode plate 10. The term "substantially the same" is understood as not exactly the same, and includes a circumstance that the first electrode plate 10 differs slightly from the second electrode plate 30. A third conductive plate 50 is disposed on the second electrode plate 30. The specific structure and connection relationship between the third conductive plate 50 and the second electrode plate 30 may be learned by referring to the descriptions of the first electrode plate 10 and the first conductive plate 40, and are omitted here.

Referring to FIG. 9, an embodiment of this application further provides an electronic device 5. The electronic device 5 includes a main body 300 and the battery 1 disclosed in any one of the foregoing embodiments. The battery 1 is accommodated in the main body 300. The electronic device 5 may be one of a mobile phone, a tablet, or an electronic reader. The electronic device 5 includes any one of the batteries 1 described above, and therefore, achieves all the beneficial effects of the battery 1. The beneficial effects are not repeated here.

Using a mobile phone as an example of the electronic device 5 in this application, the battery 1 is disposed in the mobile phone to provide power available to the mobile phone. The main body 300 is a mobile phone structure. Understandably, in other embodiments, the electronic device 5 may be other structures, without being limited to the mobile phone, tablet, and electronic reader.

To sum up, the battery 1 and the electronic device 5 according to the embodiments of this application adopt the battery 1. The first conductor 11 includes a first region 113 and a second region 114. The first conductive material layer 12 is disposed on the first conductor 11. The first conductive material layer 12 includes a first recess 121. The first region 113 is exposed from the first recess 121. The first conductive material layer 12 exposes the second region 114. The first conductive plate 40 is disposed in the second region 114 and connected to the first conductor 11. In this way, when the first conductor 11 is elongated, the first conductive plate 40 is away from the first region 113, thereby suppressing the stress between the first conductor 11 and the first conductive material layer 12.

In addition, a person of ordinary skill in the art understands that the foregoing embodiments are merely intended to illustrate this application, but not intended to limit this application. All appropriate modifications and changes made to the embodiments without departing from the spirit and conception of this application fall within the protection scope of this application.

## Claims

1. A battery, comprising a first conductor and a first conductive material layer; wherein
the first conductor comprises a first surface and a second surface, and the first surface and the second surface are two opposite surfaces of the first conductor;
the first conductive material layer is disposed on the first surface, and the first conductive material layer comprises a first recess;
the first conductor further comprises a first region and a second region, the first region is separated from the second region, the first region is exposed from the first recess, and the first conductive material layer exposes the second region; and
the battery further comprises a first conductive plate, and in the second region, the first conductor is connected to the first conductive plate.

2. The battery according to claim 1, wherein the first conductor comprises a plurality of first regions.

3. The battery according to claim 1, wherein a direction perpendicular to a surface of the first conductive material layer is a first direction, and along the first direction, the first recess comprises a first part and a second part extending by different distances.

4. The battery according to claim 3, wherein, along the first direction, the first recess further comprises a third part, and the third part extends by a different distance than the first part and the second part.

5. The battery according to claim 4, wherein a direction perpendicular to the first direction is a third direction, and along the third direction, a first length of the first part is different from a second length of the second part.

6. The battery according to claim 5, wherein, along the third direction, a third length of the third part is different from the first length of the first part and the second length of the second part.

7. The battery according to claim 5, wherein the first conductive material layer comprises a plurality of first recesses, and the plurality of first recesses overlap along the third direction.

8. The battery according to claim 3, wherein, along the first direction, an extension distance range of the first recess is 1 µm to 200 µm; and when viewed along the first direction, a length range of the first recess is 0.5 mm to 5 mm.

9. The battery according to claim 1, wherein a plurality of first regions at different locations are exposed from a same first recess.

10. The battery according to claim 1, wherein the first conductor and the first conductive material layer are a wound structure that comprises a plurality of first segments, and the first recess is disposed in the first segments.

11. The battery according to claim 1, wherein a direction perpendicular to a surface of the first conductive material layer is a first direction, and when viewed along the first direction, the first region is surrounded by the first conductive material layer.

12. The battery according to claim 1, wherein the battery further comprises a first layer containing an insulation material, and the first layer is connected to the first conductive material layer.

13. The battery according to claim 12, wherein a direction perpendicular to a surface of the first conductive material layer is a first direction, and along the first direction, a dimension of the first layer is 5 µm to 30 µm.

14. The battery according to claim 12, wherein the first layer is a bonding layer.

15. The battery according to claim 14, wherein the bonding layer comprises a substrate layer and an adhesive layer disposed on the substrate layer;
the substrate layer comprises polyethylene terephthalate; and
the adhesive layer comprises a styrene-isoprene-styrene block copolymer.

16. The battery according to claim 1, wherein the first conductor is a current collector.

17. The battery according to claim 1, wherein the first conductor comprises copper or aluminum.

18. The battery according to claim 1, wherein the first conductive material layer is an active material layer.

19. The battery according to claim 1, wherein the first conductive material layer comprises lithium.

20. The battery according to claim 1, further comprising a second conductive material layer, the second conductive material layer is disposed on the second surface, and the second conductive material layer comprises a second recess;
the first conductor further comprises a third region and a fourth region, the third region is separated from the fourth region, the third region is exposed from the second recess, and the second conductive material layer exposes the fourth region; and
the battery further comprises a second conductive plate, and in the fourth region, the first conductor is connected to the second conductive plate.

21. The battery according to claim 20, wherein the first conductor comprises a plurality of third regions.

22. The battery according to claim 20, wherein a direction perpendicular to a surface of the second conductive material layer is a first direction, and along the first direction, the second recess comprises a fourth part and a fifth part that extend by different distances.

23. The battery according to claim 22, wherein, along the first direction, the second recess further comprises a sixth part, and the sixth part extends by a different distance than the fourth part and the fifth part.

24. The battery according to claim 23, wherein a direction perpendicular to the first direction is a third direction, and along the third direction, a fourth length of the fourth part is different from a fifth length of the fifth part.

25. The battery according to claim 24, wherein, along the third direction, a sixth length of the sixth part is different from the fourth length of the fourth part and the fifth length of the fifth part.

26. The battery according to claim 24, wherein the second conductive material layer comprises a plurality of second recesses, and the plurality of the second recesses overlap along the third direction.

27. The battery according to claim 22, wherein, along the first direction, an extension distance range of the second recess is 1 µm to 200 µm; and when viewed along the first direction, a length range of the second recess is 0.5 mm to 5 mm.

28. The battery according to claim 20, wherein the second conductive material layer is a wound structure that comprises a plurality of first segments, and the second recess is disposed in the first segments.

29. The battery according to claim 20, wherein a direction perpendicular to a surface of the second conductive material layer is a first direction, and, when viewed along the first direction, the third region is surrounded by the first conductive material layer.

30. The battery according to claim 20, further comprising a first layer containing an insulation material, and the first layer is connected to the second conductive material layer.

31. The battery according to claim 30, wherein a direction perpendicular to a surface of the second conductive material layer is a first direction, and along the first direction, a dimension of the first layer is 5 µm to 30 µm.

32. The battery according to claim 30, wherein the first layer is a bonding layer.

33. The battery according to claim 32, wherein the bonding layer comprises a substrate layer and an adhesive layer disposed on the substrate layer;
the substrate layer comprises polyethylene terephthalate; and
the adhesive layer comprises a styrene-isoprene-styrene block copolymer.

34. The battery according to claim 20, wherein the second conductive material layer is an active material layer.

35. The battery according to claim 20, wherein the second conductive material layer comprises lithium.

36. The battery according to claim 20, wherein the first recess and the second recess are disposed in a staggered manner.

37. The battery according to claim 1, wherein the first conductor is a positive conductor, and the first conductive material layer is a positive conductive material layer.

38. An electronic device, comprising a main body and the battery according to any one of claims 1 to 37, and the battery is accommodated in the main body.
